(19) Europäisches Patentamt
European Patent Office
Office européen des brevets

(11) **EP 2 146 281 A2**

(12) **EUROPEAN PATENT APPLICATION**

(43) Date of publication:
**20.01.2010 Bulletin 2010/03**

(51) Int Cl.:
***G06F 9/50*** *(2006.01)*

(21) Application number: **09165410.3**

(22) Date of filing: **14.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **15.07.2008 US 218382**

(71) Applicant: **UNISYS CORPORATION**
**Blue Bell, PA 19424 (US)**

(72) Inventors:
• **Erickson, Phillip, J.**
**Shoreview, MN 55126 (US)**

• **Powderly, Terrence, Vincent**
**East Fallofield, PA 19320 (US)**
• **Sanderson, Andrew, F.**
**Havertown, PA 19083 (US)**
• **Schwartz, Gary, L.**
**Circle Pines, MN 55014 (US)**
• **Serrano, Sebastian**
**Wayne, PA 19087 (US)**
• **Sievert, James, A.**
**Shoreview, MN 55126 (US)**

(74) Representative: **Modiano, Micaela Nadia et al**
**Modiano & Partners**
**Thierschstrasse 11**
**80538 München (DE)**

(54) **Decentralized hardware partitioning within a multiprocessing computing system**

(57)     In general techniques for performing decentralized hardware partitioning within a multiprocessing computing system am described therein. More specifically, the multiprocessing computing system comprises first and second independent computing cells, where the first cell comprises a first processor that calculates a partition identifier. The partition identifier uniquely identifies a partition to which the first cell belongs. The first cell also comprises a second processor that establishes the partition within the multiprocessing computing system based on the partition identifier, and executes a single operating system across the partition. In the event the established partition successfully includes the first and second cells, the first and second cells execute the single operating system across the partition. Because the cells themselves perform the partitioning process, scalability may be achieved more easily. Moreover, the overall cost of the system may be reduced because a dedicated processor may no longer be required to perform partitioning.

FIG. 1

EP 2 146 281 A2

**Description**

**RELATED CASES**

The entire contents of co-pending application Ser. No. _____, filed _____, entitled "Mainframe Computing System Having Virtual IPMI Protocol," by named inventors J. Sievert et al., attorney docket umber RA-5847, are hereby incorporated by reference as if fully set forth herein.

**TECHNICAL FIELD**

The invention relates to computing systems and, more particularly, to forming partitions within a multiprocessing computing environment.

**BACKGROUND**

Computers are becoming increasingly more complex, and sophisticated computers may include multiple processors, as well as, multiple memory units. These multiprocessing computers may further connect together to form a large mainframe computer, where each multiprocessing computer may share its processing power and memory with one or more of the other multiprocessing computers via communication interfaces. In the mainframe context, each of these multiprocessing computers is typically referred to as a "cell," and the cell represents the basic execution building block of the mainframe.

When the administrator logically associates two or more cells to define a single execution environment, the combination of these cells is referred to as a "partition" on which an instance of an operating system is run. It is generally desirable to combine the processing power and memory of multiple cells into a partition to perform complicated tasks that a single cell atone could not complete within a reasonable amount of time. Traditional mainframe computers include a single, system-level processor or service processor that is solely responsible for partitioning the cells and managing the partitions. Further, a typical mainframe computer allows for multiple partitions to be specified, and each partition can combine varying numbers of cells to tailor their combined processing power to the task at hand.

While mainframe computers offer significant processing power and enable task specific assignment of processing power by way of partitions, generally mainframe computers are not readily scalable. That is, the logical addition and removal of cells to and from partitions within the mainframe computer can be a manual, time consuming process that requires significant knowledge of the existing cells and partitions. For example, an administrator may have to keep track of partition identifiers that identify each partition, cell identifiers that identify each cell, which cells belong to which partitions or more likely which cell identifiers belong to which partition identifiers, as well as, higher level concerns, such as which cells maintain which resources and which partitions require additional cell resources to achieve a certain partition configuration. Thus, from an administrative perspective, conventional mainframe computers are not readily scalable.

**SUMMARY**

In general, the invention is directed to techniques for performing decentralized hardware partitioning within a multiprocessing computing system. Decentralized hardware partitioning can be achieved by allocating one service processor per cell and allowing those cells to independently control their partitioning. By each cell internally determining its own unique partition identified, all cells can exist independent from one another, but at the same time, work together with other cells that have an internally determined partition identifier having common attributes to automatically form a multi-cell partition in a decentralized manner. Thus, each cell holds its own view of the logical partitioning of the multiprocessing computer system, and the cells utilize their partition identifiers to communicate with other cells and create partitions without requiring system-level control.

As one example, a multiprocessing computing system includes at least two (i.e., first and second) independent computing cells, where each of the first and second cells includes a service processor that negotiates with the service processor of the other cell to control the logical inclusion of the respective cell within one or more partitions. Because the cells themselves automatically perform the partitioning process, the multiprocessing system may achieve increased scalability. For example, the administrator need not manually keep track of the multitude of partition identifiers, cell identifiers, and associations between these identifiers. The administrator therefore may focus on the more important issues of cell maintenance, partition performance, and other higher level concerns. Moreover, the ability of the cells to perform this "decentralized hardware partitioning" technique, as it is referred to herein, may reduce the overall cost of the system because a dedicated, system-level processor may no longer be required to perform partitioning. Instead, less expensive baseboard management controllers (BMCs) can perform the management and partitioning duties of a system-level service processor.

Continuing the example, the first cell includes a first processor that infernally calculates a partition identifier. The partition identifier is a logical construct that uniquely identifies a partition to which the cell belongs. As an example, the partition identifier may comprise a bit field based upon a cell identifier by which each cell within the multiprocessing computing system is uniquely identified. A partition identifies comprising a two-bit, binary bit field of "11," for example, indicates that cells identifies by cell identifiers "0" and "1" fall within the partition in accordance with conventional bitmask techniques. Using this partition calculation, the first and second cells need only receive a selection of which cells belong to a particular partition, and the cells themselves can calculate the partition identifier based on the received selection information. In this example, the partition identifier is said to be "3".

Once calculated, the first processor can determine whether the partition includes the second cell. Referring to the above example, the first processor could determine that the second processor, identified by cell identifier "1," belongs to its partition identified by partition identifier "11" through conventional bitmask operations. Based on this analysis, the first processor establishes the partition within the multiprocessing computing system. The partition may include only the first cell or both the first and second cell, as in the above example. If the partition includes only the first cell, the first cell executes a single operating system constrained to the single cell. If the established partition successfully includes both the first and second cells, both the first and second cells cooperate to execute the single operating system across both cells. Thus, a multiprocessing computing system can form a partition in accordance with the decentralized hardware partitioning techniques with minimal administrative oversight and in a manner that possibly reduces the overall cost of the system.

In one embodiment, a method of partitioning a multiprocessing computing system having a plurality of independent computing cells, the method comprises calculating a respective partition identifier with each of the computing cells of the multiprocessing computing system, wherein the partition identifier uniquely identifies a partition to which the corresponding cell belongs. The method further comprises reconfiguring the multiprocessing system to establish one or more partitions within the multiprocessing computing system based on the partition identifiers calculated by the computing cells and executing a respective instance of an operating system across each of the partitions, wherein each partition comprises a logical association of one or more of the plurality of cells to define a single execution environment.

In another embodiment, a multiprocessing computing system comprises a plurality of computing cells that each calculates a respective partition identified, wherein the partition identifier uniquely identifies a partition to which the corresponding cell belongs. The plurality of cells further collectively reconfigure the multiprocessing system to establish one or more partitions within the multiprocessing computing system based on the respective partition identifies and collectively execute a respective instance of an operating system across each of the partitions, wherein each partition comprises a logical association of one or more of the plurality of cells to define a single execution environment.

In another embodiment, a multiprocessing computing system comprising a plurality of computing means for calculating a respective partition identifier, wherein the partition identifier uniquely identifies a partition to which the corresponding computing means belongs. The plurality of computing means are further for reconfiguring the multiprocessing system to establish one or more partitions within the multiprocessing computing system based on the respective partition identifiers, and executing a respective instance of an operating system across each of the partitions, therein each partition comprises a logical association of one or more of the plurality of computing means to define a single execution environment.

The details of one or more embodiments of the invention are set forth in the accompanying drawings and the description below. Other features, objects, and advantages of the invention will be apparent from the description and drawings, and from the claims.

## BRIEF DESCRIPTION OF DRAWINGS

FIG. 1 is a block diagram illustrating an exemplary multiprocessing computing system that performs decentralized hardware partitioning as described herein.

FIG. 2 is a block diagram illustrating an exemplary partition formed within the multiprocessing computing system of FIG. 1 according to the decentralized hardware partitioning technique described herein.

FIG. 3 is a diagram illustrating an exemplary logical view of a partition within a multiprocessing computing system after performing the decentralized hardware partitioning techniques described herein.

FIGS. 4A-4B are diagrams illustrating respective exemplary partition IDs calculated in accordance with the decentralized hardware partitioning techniques described herein.

FIG. 5 is a flowchart illustrating exemplary operation of a cell in performing the decentralized hardware partitioning techniques described herein.

## DETAILED DESCRIPTION

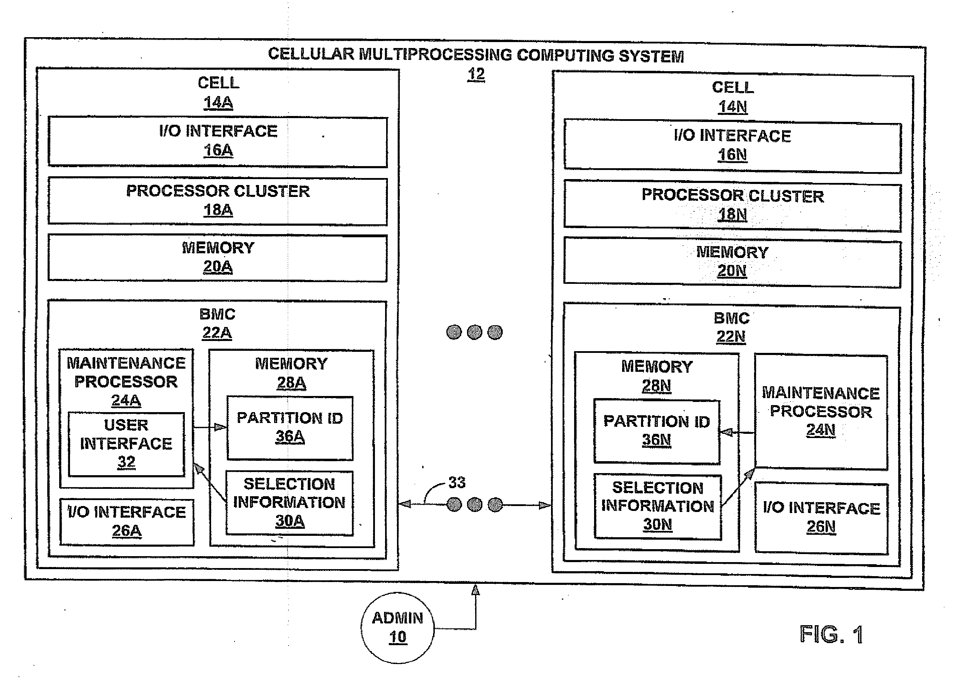

FIG. 1 is a block diagram illustrating an exemplary cellular multiprocessing computing system 12 that performs decentralized hardware partitioning as described herein. As shown in FIG. 1, cellular multiprocessing computing system 12 comprises cells 14A-14N ("cells 14") that each represents a functional block of cellular multiprocessing computing system 12. Throughout the below disclosure, use of A-N, such as cells 14A-14N, or any other alphabetic range, such as N-Z, is not intended to indicate a particular number of elements, modules or any other component, but is representative of a variable number of each respective clement, module, or component.

Cells 14 may be substantially similar to one another and may comprise substantially similar components. For example, each of cells 14 include respective input / output interfaces 16A-16N ("I/O interfaces 16" in FIG. 1), processor clusters 18A-18N ("processor clusters 18"), memories 20A-20N ("memories 20"), and baseboard management controllers 22A-22N ("BMCs 22" in FIG. 1) and these components may act in a substantially similar manner. Thus, each of cells 14 functions so as to provide its own computing environment, independent of other cells 14, but cells 14 may also interconnect to provide cellular multiprocessing computing systems 12 with more computing power and memory storage space.

When two or more cells 14 are logically associated to combine computing power and memory storage space to form a single execution environment on which an instance of an operating system can be run, the two or more cells 14 are said to operate within a "partition." A partition is typically the next highest building block above a cell in a multiprocessing computing environment, such as exemplary cellular multiprocessing computing system 12. A partition, however, does not require two or more of cells 14 and may be formed upon a single one of cells 14 that is configured to operate independently from the other cells 14. That is, a partition, as it relates to the decentralized hardware partitioning techniques described herein and unlike conventional notions of partitions, may be formed from a single one of cells 14 that operates independently of the other cells 14 or two or more of cells 14 that are logically associated to combine resources. Thus, in all example embodiment where multiprocessing computing system 12 comprises 32 cells 14, 32 partitions may be formed by those 32 cells 14.

Cells 14 may communicate with one another via respective I/O interfaces 16. That is, I/O interfaces 16 of cells 14 enable communication with other I/O interfaces 16 of other cells and / or a network. I/O interfaces 16 may be dedicated to general purpose communication tasks, unrelated to the monitoring and low-level configuration of cells 14 described below. I/O interface 16 may operate according to standard communication protocols and provide the physical interface to other I/O interfaces 16 and / or the network over which information may be conveyed. For example, I/O interfaces 16 may each comprise a standard Ethernet interface and associated Ethernet protocols to enable multicast communications across a common Ethernet interconnect. Alternatively, or in conjunction with the above exemplary Ethernet interconnect, I/O interfaces 16 may comprise interfaces for communicating with a network, such as a packet-based network, and associated protocols, such as transmission control protocol / internet protocol (TCP/IP), for sending and receiving data across the network. In either case, I/O interface 16 may provide a wired or wireless connection between cells 14 and / or a network, where a wireless connection may occur according to one of the Institute of Electrical and Electronics Engineers 802.11 standards, Bluetooth™, or any other wireless communication standard. For ease of illustration purposes, the interconnectivity between I/O interfaces 16 is not shown, although any communicative mediums corresponding to the above listed networks may be employed.

Each of cells 14 further includes a processor cluster 18 that communicate across a cell interconnect. Processor clusters 18 may include any number of processors coupled together in a cluster formation so as to concurrently execute operations. When multiple cells 14 are logically associated as part of the same partition, processor clusters 18 of each of the cells, as described below, provide resources for execution of a single instance of an operating system (not shown in FIG. 1).

BMCs 22 generally manage the interface between the system management software and the platform hardware. For example, BMCs 22 may receive reports from sensors (not shown in FIG. 1) located throughout their respective cells 14. The reports may concern cell parameters, such as temperature, cooling fan speed, power mode, and operating system status. BMCs 22 may monitor their respective sensors and send alerts of a potential cell failure to an administrator 10 if, for example, any of the parameters do not stay within preset limits.

As shown in FIG. 1, each of BMCs 22 includes respective maintenance processors 24A-24N ("maintenance processors 24") that may perform the above described sensor monitoring and I/O interfaces 26A-26N ("I/O interfaces 26" in FIG. 1) that may provide an interface to the above described communication capabilities upon which the reports are received and the alerts are sent. I/O interlace 26 may provide a separate communication interface from that provided by I/O interfaces 16. The communication interface provided by I/O interfaces 26 may comprise a communication interface dedicated for use by BMCs 22 for use in monitoring cells 14, low-level configuration of cells 14, and otherwise performing the techniques described herein. That is, I/O interfaces 26 may provide a separate interface to a different interconnect that may be described as a back-end interconnect used solely for monitoring and configuring cells 14.

I/O interfaces 26 generally provide an interface to interconnect 33. Interconnect 33 may comprise an Ethernet interconnect that conforms to one of the various Institute of Electrical and Electronics Engineers (IEEE) 802.3 standards. The Ethernet interconnect may take many different forms or topologies, including a star topology and a bus topology. Via either of these topologies or any other topology, interconnect 33 may couple each of BMCs 22 of cells 14 together.

For ease of illustration, supporting modules or mechanisms necessary to implement interconnect 33 are not shown in FIG. 1, however, cells 14 may each comprise these modules in order to implement interconnect 33.

BMCs 22 may also include respective memories 28A-28N ("memories 28") that may store these reports and alerts locally. Both memories 20 and 28 may comprise any volatile memory such as random access memory (RAM), dynamic RAM (DRAM), static RAM (RAM), or non-volatile memory such as, a magnetic data storage device or optical data storage device, FLASH memory, or electrically erasable programmable read only memory (EEPROM).

While the above generally describes the functionality of BMCs 22, BMCs 22 further perform functions specific to the decentralized hardware partitioning technique described herein. In particular, each of BMCs 22 may receive partition selection information 30A-30N ("selection information 30" in FIG. 1) from a user interface 32 executing within one of maintenance processors 24 and store selection information 30 to respective memories 28. That is, one of maintenance processors 24 may be designated as a system master, and this master maintenance processor 24, e.g., maintenance processor 24A, executes a user interface 32 by which an administrator, such as admin 10, may interact to input selection information 30A. The system master maintenance processor, e.g., processor 24A, transmits via I/O interface 24A across interconnect 33, selection information 30A to each of the other cells 14, which successively store selection information 30A as respective selection information 30B-30N.

Administrator 10 may select which of cells 14 belong in a particular partition via user interface 32. In some embodiments, user interface 32 may present a graphical user interface whereby administrator 10, for example, merely "drags and drops" icons representing cells into configurable areas of a screen that each represent a different partition. In these embodiments, administrator 10 need not even know of or contemplate lower-level identifiers or other configuration data, such as the below described cell and partition identifiers. Alternatively, in other embodiments, selection information 30 may be preprogrammed by administrator 10 or other multiprocessing technical specialists such that a particular partitioning scheme is defined. In yet other embodiments, each of cells 14 may default into their own partition such that no two of cells 14 combine in a single partition. Typically, cells 14 implement this default partitioning scheme in the absence of a preprogrammed or administrator selected scheme. Regardless of which embodiment is implemented, administrator 10 need not know of or manually maintain the underlying partition and/or cell identifiers.

After BMCs 22 store respective selection information 30, each of maintenance processors 24 respectively and internally calculate partition identifiers 36A-36N ("partition IDs 36" in FIG. 1) based on respective selection information 30 and store partition IDs 36 to memories 28. A more thorough explanation of how partition identifiers 36 are calculated is described below, but generally maintenance processors 24 analyze their respective selection information 30 to prepare a bit field indicating which of cells 14 should combine to form a partition.

The bit field may be employed, in some embodiments, in a manner similar to that of conventional bitmask operations. Alternatively, the bit field may be employed in a manner that differs substantially from that of conventional bitmask operations. For example, the bit field described herein, while representative of which of cells 14 belong to a given partition, may be summed to generate a partition ID. The partition ID is compared with other partition IDs generated by other cells 14 to determine whether to form a partition. These other partition IDs are each calculated internally as described above and communicated to each of maintenance processors 24 in the manner described below to facilitate the comparison.

The bit field generated after analyzing selection information 30 is stored to respective memories 28 as partition ID 36. In some embodiments, partition IDs 36 further indicate within the bit field a master cell for each partition. A designated master cell of cells 14 is generally responsible for initiating the process by which a particular partition is formed.

After storing partition IDs 36, maintenance processors 24 analyze their respective partition IDs 36 to determine whether the partition includes other of cells 14. Based on this determination, one or more processors within processor clusters 18 establish the partition within the cellular multiprocessing computing system. That is, one or more of cells 14 then exchange respective partition IDs 36 (or one of the cells designated as master communicates the partition ID it calculated), allowing those one or more cells 14 to determine that they share a common partition. Upon determining that they chare a common partition ID, those one or more cells 14 execute a single operating system across the established partition. In the event the established partition successfully includes two or more of cells 14, these two or more of cells 14 cooperate to execute a common instance of an operating system across the partition. That is, each of the two or more cells 14 within the partition may execute a portion of the single operating system or share execution of different tasks pertaining to the single operating system.

In this manner, cells 14 within cellular multiprocessing computing system 12 perform decentralized hardware partitioning to increase the scalability of cellular multiprocessing computing system 12 while possibly reducing the overall cost of system 12. Because the cells themselves perform or automate at least some of the partitioning process, administrator 10 need not manually keep track of or be concerned with the multitude of partition identifiers, cell identifiers and their associations. Thus, administrator 10 may more readily scale system 12 to increased partitioning due to the less complexity of administering the partitions. Moreover, the ability of cells 14 to perform this decentralized hardware partitioning technique may reduce the overall cost of the system because a dedicated processor may no longer be required to perform partitioning.

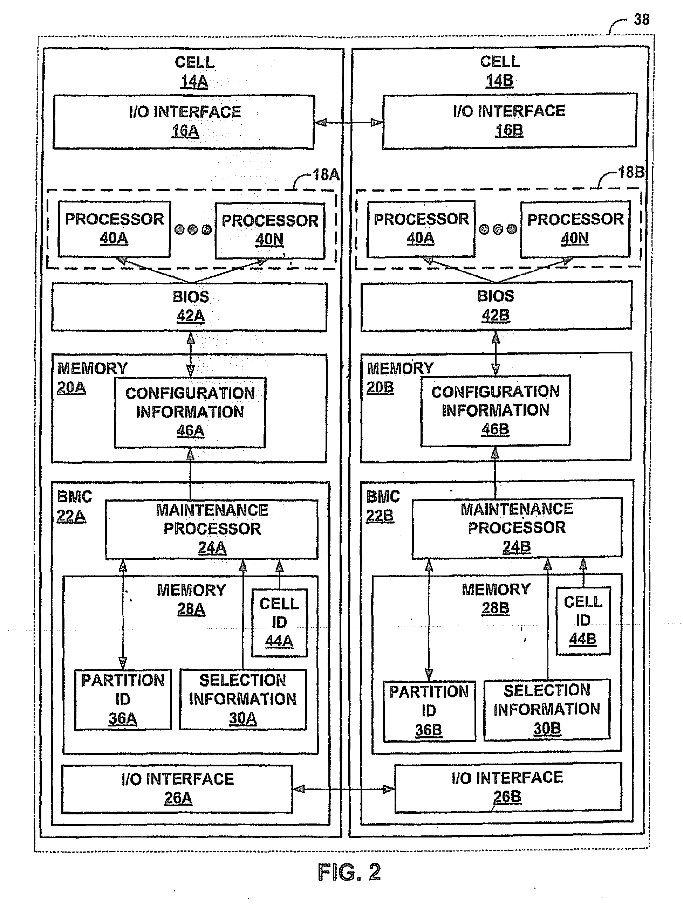

FIG. 2 is a block diagram illustrating an exemplary partition 38 formed within cellular multiprocessing computing system 12 of FIG. 1 according to the decentralized hardware partitioning technique described herein. Partition 38 is formed by the association of a first cell 14A and a second cell 14B. Although shown as including two cells in FIG. 2, i.e., cells 14A, 14B. partition 38 may include any number of cells 14 including only a single one of cells 14. Thus, the techniques as described in reference to FIG. 2 should not be limited strictly to the below described embodiment. Moreover, cells 14 represent one exemplary form of a computing means for performing the techniques described in this disclosure.

As shown in FIG. 2, cells 14A, 14B may be substantially similar in that both contain substantially the same components. For example, cells 14A, 14B include the above described I/O interfaces 16A, 16B, processor clusters 18A, 18B, memories 20A, 20B, and BMCs 22A. 22B. Processor clusters 18A, 18B each include processors 40A-40N ("processors 40"). One or more of processors 40 may execute instructions stored to a computer-readable medium, such as memories 20, to implement the decentralized hardware partitioning described herein. Although from FIG. 2 it could be implied that each of cells 14 maintain the same number of processors 40 within each processor cluster 18, the techniques, as described herein, do not require this particular processor configuration. Instead, each of processor clusters 18 may include any number of processors 40, and the techniques again should not be limited to the embodiment as shown in FIG. 2.

Further, cells 14A, 14B may contain other components that are substantially the same, such as basic input/output systems 42A, 42B ("BIOSs 42A, 42B" in FIG. 1). BIOSs 42A, 42B generally represent firmware code executed by respective cells 14A, 14B upon the initial powering, or booting, of processor clusters 18A, 18B respectively. The primary function of BIOSs 42A, 42B is to prepare cells 14A, 14B so other software programs (not shown in FIG. 2) stored to memories 20A, 20B can load, execute, and assume control of cells 14A, 14B. Typically, processor clusters 18A, 18B execute respective BIOSs 42A, 42B prior to initiating execution of the operating system. Although described herein with respect to BIOSs 42A, 42B, the decentralized hardware partitioning techniques may apply to any other type of software or hardware dedicated to controlling the boot process.

As described above, an administrator, such as administrator 10 of FIG. 1, may enter selection information 30 into user interface 32 executing within cellular multiprocessing computing system 12. Each of cells 14 receive selection information 30 and store their respective selection information 30 to memories 28. In FIG. 2, both of cells 14A, 14B store their respective selection information 30A, 30B to memories 28A, 28B residing within BMCs 22A, 22B. Memories 28A, 28B may also store cell identifiers 44A, 44B ("Cell IDs 44A, 44B" in FIG. 2) that uniquely identify respective cells 14A, 14B within cellular multiprocessing computing system 12. Cell identifiers 44A, 44B may comprise sequential numbers between a set range, where, for example, cell 14A's cell identifier 44A is "0," cell 14B's cell identifier 44B is "1," and so forth. Based on this selection information 30A, 30B and cell IDs 44A, 44B, maintenance processors 24A, 24B may each infernally determine respective partition IDs 36A, 36B.

As an example, maintenance processors 24A may determine partition ID 36A by first parsing selection information 30A to extract which other of cells 14 belong to its partition. Typically, maintenance processor 24A extracts all other cell identifiers 44 that belong in its partition. Assuming both cells 14A, 14B belong to partition 38. maintenance processor 24 would extract cell identifiers 44A, 44B, which, as described above, may equal "0" and "1," respectively. Next, maintenance processor 24A would determine partition ID 36A by forming a bit field, where each bit represents whether a cell of a given cell identifier belongs to partition 38. Using the above cell identifiers of "0" and "1" as an example, the following four bit bit field could be constructed for a four cell system:

| Bit Position: | 3 | 2 | 1 | 0 |
|---|---|---|---|---|
| Bit field: | 0 | 0 | 1 | 1 |

The bit position corresponds to unique cell identifiers 44 and the bit field at each bit position indicates whether cells 14 having the cell identifier corresponding to that bit position belong in a given partition. In the above example, both cells 14 having the cell identifier equal to "1" and "0," i.e., cells 14A, 14B in the above example, belong to the partition because a bit field of "1" indicates they belong, while a bit field of "0" indicates those cells having a cell identifier 44 corresponding to "3" and "2" do not belong within the partition. To determine partition ID 36A, maintenance processor 24A may calculate a sum according to the following equation:

$$\text{Partition ID} = \sum_{i=0}^{N} (B_i)2^i$$

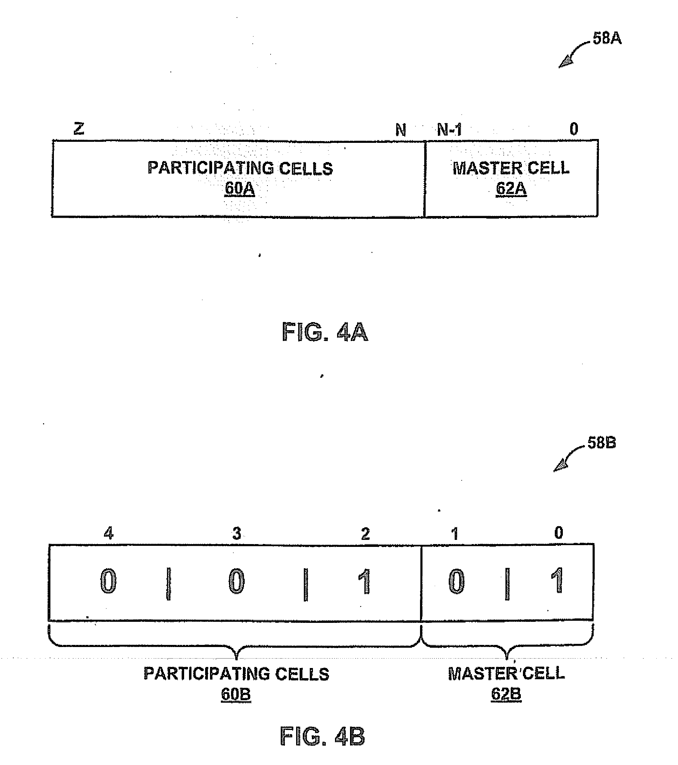

where $B_i$ equals the bit field at the $i^{th}$ bit position. Thus, according to the above equation, maintenance processor 24A would calculate partition ID 36A of 3, as $0*2^3 + 0*2^2 + 1*2^1 + 1*2^0 = 3$. Another more involved example of computing a partition ID that includes a master cell designation is described below in reference to FIGS. 4A, 4B.

Summing the bit field yields a unique partition ID that may be used to uniquely identify not only the partition but also any intra-partition communications. Each of cells 14A, 14B independently calculates an identifier (i.e., a "partition ID") in, for example, the manner described above and exchange calculated partition IDs 36A, 36B to determine whether cells 14A, 14B belong to the same partition. If, for example, partition ID 36A equals partition ID 36B, then cells 14A, 14B, upon receiving and comparing these partitions IDs 36A, 36B, may determine they belong to the same partition. However, if partition IDs 36A, 36B are not equal to one another, cells 14A, 14B may determine that they belong to separate and distinct partitions. Moreover, use of the partition IDs is not limited merely to partitioning but may be used for subsequent operation. In some embodiments, the partition ID may be used for communications, such as use as a unique partition address and/or for forming a virtual intelligent platform management bus (IPBM) to facilitate secure intra-partition communication.

In this way, the cells participating in a partition can perform or automate at least some of the partitioning process including generation of the partition ID. As a result, the administrator need not manually keep track of or be concerned with the multitude of partition identifiers and cell identifiers and the associations between these and possibly other identifiers.

In the example shown in FIG. 2, cells 14A, 14B first internally calculate partition IDs 36A, 36B. Cells 14A, 14B then exchange partition IDs 36A, 36B (or one of the cells designated as master communicates the partition ID it calculated), allowing cells 14A, 14B to determine that they share a common partition, i.e., that both partition IDs 36A, 36B equal 3 in the above example. Maintenance processors 24A, 24B analyze partition IDs 36A, 36B to generate configuration information 46A, 46B. Alternatively, in some embodiments, maintenance processors 24A, 24B update existing configuration information 46A, 46B stored to memories 20A, 20B. Configuration information 46A, 46B may include information used to control the subsequent boot process and may indicate which of cells 14 to contact to form a partition. In some embodiments, the generating or updating of configuration information 46A, 46B may depend on whether respective partition IDs 36A, 36B designate cells 14A, 14B as the master cell. For example, assuming partition ID 36A designates cell 14A as the master cell, maintenance processor 24A may generate or update configuration information 46A to indicate that processors 40 of processor cluster 18A should form partition 38 with cell 14B. In this instance, maintenance processor 14B may not generate or update configuration information 46B except to indicate to which partition cell 14B belongs.

After generating or updating configuration information 46A, 46B if appropriate, maintenance processors 24A, 24B begin the boot process by powering on one or more of processors 40 of respective processor clusters 18A, 18B. One or more of processors 40 of each of processor clusters 18A, 18B load respective BIOSs 42A, 42B and if appropriate additional configuration information 46A, 46B. Processors 40 of each of processor clusters 18A, 18B execute according to respective BIOSs 42A, 42B and, at some point during this execution, encounter configuration information 46A, 46B, which they respectively execute to form partition 38.

In the above described embodiment involving a master cell, one or more of processors 40 of processor cluster 18A executes BIOS 42A that uses as input configuration information 46A. Processors 40, in this instance, communicate with cell 14B via I/O interface 16A, whereupon processors 40 request that cell 14B form partition 38. In response to this request, processors 40A of processor clusters 18B access configuration information 46B to determine whether cell 14B belongs to partition 38. Assuming configuration information 46B indicates that cell 14B belongs to partition 38, processors 40 respond to the request. Upon responding, processor clusters 18A, 18B cooperate to form partition 38 such that they execute a single operating system across partition 38.

If, however, configuration information 46B indicates that cell 14B belongs to some other partition, processors 40 of processor cluster 18B may not respond to the request, i.e., remain silent. In this manner, the techniques described herein allow partitions to be asymmetrical. That is, cell 14A may view its partition as including cell 14B, while cell 14B may view its partition as including only itself, for example. This silence may indicate, for example, to processors 40 of processor cluster 18A that cell 14B is malfunctioning. Cell 14A in this instance may send an alert to administrator 10, but processor cluster 18A may still load and execute an operating system despite the failure to include cell 14B in partition 38.

The notion of asymmetrical partitions may be beneficial ill many instances, and particularly during times of cell malfunction. During times of cell malfunction, asymmetrical partitioning enables administrator 10 to move a malfunctioning cell 14B, for example, into its own partition for diagnostic and testing purposes without considering the affect on other partitions, such as partition 38. In other words, administrator 10 may interact with user interface 32 of FIG. 1, for example, to specify that malfunction cell 14B form its own partition. As a result, cell 14B may determine or compute a partition ID different from cell 14A and no longer respond to cell 14A.

Administration 10 need not consider the affects on partition 38 because cell 14A continues to operate even though cell 14B has not joined partition 38. After repairing or possibly replacing cell 14B, administrator 10 may simply include cell 14B back into partition 38, whereupon cells 14A, 14B reestablish partition 38 without further oversight from administrator 10. Again, by operating according to the decentralized partitioning techniques described herein, cells 14 may significantly lessen the burdens associated with scalability in conventional multiprocessing computing systems, thereby increasing scalability while possibly reducing the total cost of cellular multiprocessing computing system 12.

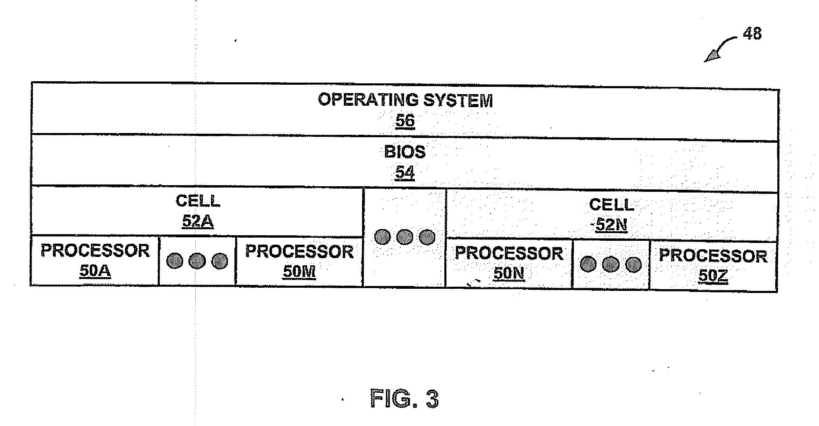

FIG. 3 is a diagram illustrating an exemplary logical view 48 of a partition within a cellular multiprocessing computing system, such as cellular multiprocessing computing system 12 of FIG. 1, after performing the decentralized hardware partitioning techniques described herein. In logical view 48, the lower two layers represent physical layers with each successive higher layer indicating an increasing level of abstraction. For example, logical view 48 includes at its lowest level processors 50A-50Z ("processors 50"), at its second lowest level cells 52A-52N ("cells 52"), at its third lowest level or second highest level BIOS 54, and at its highest level operating system 56. Thus, processors 50 represent the lowest level of abstraction and operating system 56 represents the highest level of abstraction in logical view 48.

As shown in FIG. 3, logical view 48 indicates that each of cells 52 include multiple processors 50. In particular, cell 52A includes processors 50A-50M and cell 52N includes processors 50N-50Z, where both processors 50A-50M and processors 50N-50Z may represent processor clusters, such as processor clusters 18. Logical view 48 next indicates that BIOS 54 executes on top of cells 52, which may represent that cells 52 execute a single BIOS 54 across all of processors 50 executing within a given partition. Finally, logical view 48 indicates that a single instance of operating system 56 (i.e., shared OS state data, tasks, processes, memory management and the like) executes on top of BIOS 54 and across all of cells 52. As logical view 48 represents a logical view of a partition, such as partition 38 of FIG. 2, a single operating system 56 can be described as executing across an entire partition. Thus, each of processors 50 may execute a portion of both BIOS 54 and operating system 56.

FIGS. 4A-4B are diagrams illustrating respective exemplary partition IDs 58A, 58B calculated in accordance with the decentralized hardware partitioning techniques described herein. Partition ID 58A shown in FIG. 4A illustrates the generalized format of a partition ID, while partition ID 58B shown in FIG. 4B illustrates a particular example partition ID. Both of partition IDs 58A, 58B ("partition IDs 58") include respective participating cells regions 60A, 60B ("participating cells regions 60") and master cell regions 62A, 62B ("master cell regions 62"). Although described below in respect to partition IDs 58 that include master cell regions 62, partition IDs 58, as described above, may include only participating cells regions 60A.

As shown in FIG. 4A, participating cells region 60A may comprise a plurality of bits (e.g., N to Z bits shown at the top of partition ID 58A in FIG. 4A) that indicate which cells, e.g., cells 14 of FIG. 1, belong to the partition identified by partition ID 58A. Typically, participating cells regions 60A designates one bit of the plurality of bits for each cell 14 included within the cellular multiprocessing computing system, e.g., cellular multiprocessing computing system 12, similar to the exemplary above described partition ID calculated with respect to the four cell system. In another embodiment, however, to meet certain addressing requirements (e.g., the intelligent platform management bus addressing scheme only allows for seven-bit addresses), the cell that is storing partition ID 58A, e.g., cell 14A, may not include a bit that corresponds to its cell ID, e.g., cell ID 44A of FIG. 2. The cell calculating partition ID 58A can determine the length of participating cells region 60A from the selection information it receives, such as selection information 30 of FIGS. 1, 2. As an example, cell 14A may determine that X number of cells exist from selection information 30 and provide X bits, in some embodiments, or X-1 bits in the other embodiments.

Master cell region 62A also includes a plurality of bits (e.g., bits N-1 to 0 shown at the top of partition ID 58A in FIG. 4A) that indicate which one of the cells belonging to the partition identified by partition ID 58A is the master cell. As described above, the master cell typically is responsible for initiating the formation of the partition identified by partition ID 58A. The cell calculating partition ID 58A can determine the length of master cell region 62A also from the selection information it receives. As an example, the cell calculating partition ID 58A may determine the largest cell identifier used within a particular cellular multiprocessing computing system, or in instances where the cells are sequentially ordered from 0 to X, the number X. The cell may then formulate master cell region 62A such that it includes a sufficient number of bits to represent the number X. Thus, if X equals "15," i.e., there are 16 cells in the system, master cell region 62A would comprise 4 bits, as $1*2^3+1*2^2+1*2^1+1*2^0 = 15$. As described below, master cell regions 62 act as an offset in calculating which cells belong to the partition identified by partition IDs 58.

For example, participating cells region 60B of FIG. 4B comprises 3 bits (e.g., bits 2-4 shown at the top of partition ID 58B in FIG. 4B) that indicate which of four cells included within a four cell system belong to the partition identified by partition ID 58B. If for example a cell within the four cell system was identified by a cell ID of "0" and this cell was calculating partition ID 58B, the three bits of participating cells region 60B would indicate that a cell having a cell ID of "1" participates in the partition, as bit 2 of participating cells region 60B is a "1," which as described above indicates the cell belongs to the partition. Cells identified by cell IDs of "2" and "3" would not belong to the partition because bits 3 and 4 respectively are a "0," which as described above indicates these cells do not belong to the partition.

Master cell region 60B acts as an offset because it offsets the bit number of participating cells region 60A. In the above example, bit 2 identifies cell having a cell ID of "1" because master cell region 60B includes 2 bits, i.e., bits 0 and 1, and those 2 bits are subtracted from the beginning bit of participating cells region 60B, e.g., bit 2, to yield bit corresponding to a cell ID of "0." However, as described above, the cell identified by cell ID of "0" is not included in the calculation, therefore the next cell ID in the sequence is designated by bit 2 of participating cells region 60B, i.e., cell ID of "1."

As another example, if a cell within the four cell system was identified by a cell ID of "1" and this cell was calculating partition ID 58B, the three bits of participating cells region 60B would indicate that a cell having a cell ID of "0" participates in the partition, as bit 2 of participating cells region 60B is a "1." Cells identified by cell IDs of "2" and "3" would not belong to the partition because bits 3 and 4 respectively are a "0." Further examples can be provided for cells identified by cell IDs of "2" and "3" however these are not provided herein as they are merely repetitive. Thus, each cell may conserve storage space by possibly not including itself as a bit within participating cells regions 60.

In this other example, master cell region 60B still serves as an offset but unlike the preceding example, the cell identified by cell ID of "1" is calculating partition ID 58B and thus, bit 2 of participating cells region 62B correctly identifies the cell having a cell ID of "0." However, when calculating bit 3, the cell identified by cell ID "1" is not included within the calculation, and therefore the next cell ID in the sequence is designated by bit 3 of participating cells region 60B, e.g., cell ID of "2." This process is repeated for each master cell offset bit greater than 1, which can be generalized and restated as: for each bit greater than or equal to the cell ID of the cell generating the partition ID, after being offset by the master cell offset, the bit must be increased by one to reach the appropriate cell ID that correlates with the bit stored to the original bit number.

To conclude the example, master cell region 62B identifies a cell having a cell ID of "1" as the master cell of the partition identified by partition ID 58B. If this cell "1" is calculating partition ID 58B, it will assume the responsibility of formulating the partition identified by partition ID 58B, as described above. If another cell of the partition is calculating partition ID 58B, which in this instance would only be a cell having a cell ID of "0," cell "0" would await for cell "1" to form the partition, also as described above.

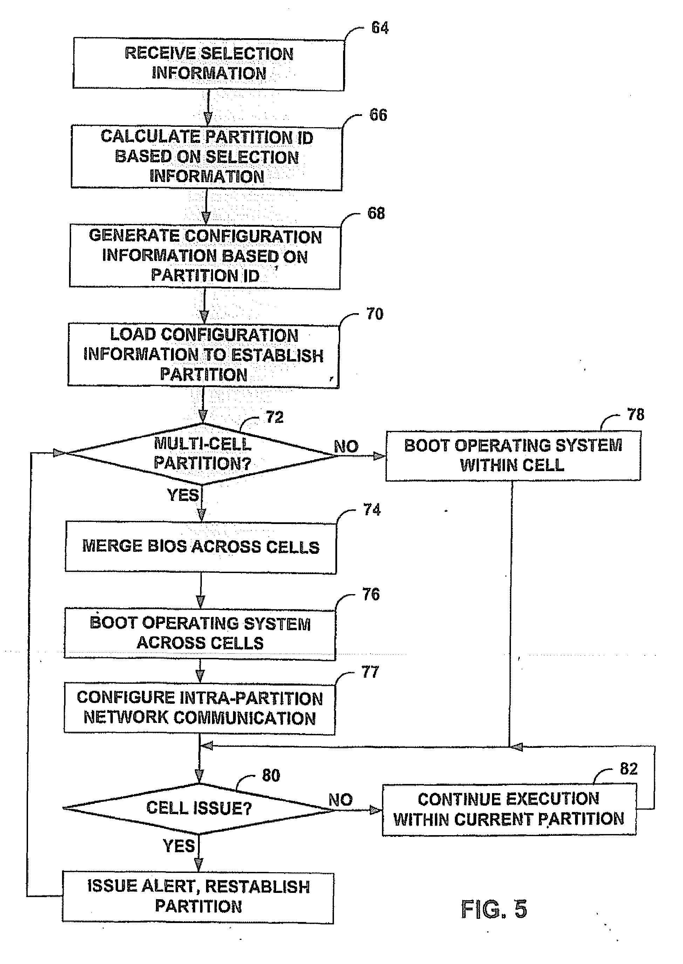

FIG. 5 is a flowchart illustrating exemplary operation of a cell, such as cell 14A of FIG. 2, in performing the decentralized hardware partitioning techniques described herein. Although described in reference to a two cell system of FIG. 2, the techniques may equally apply to form a one cell or multiple cell partition.

Initially, BMC 22A of cell 14A receives selection information 30A and stores selection information 30A to memory 28A, as described above (64). Maintenance processor 24A of BMC 22A calculates partition ID 36A based on selection information 30A (66). In some embodiments, maintenance processor 24A calculates a partition ID 36A to include only a participating cells region, as described above. In other embodiments, maintenance processor 24A calculates a partition ID 36A that is substantially similar in format to partition ID 58B of FIG. 4B. In these instances, maintenance processor 24A may exclude a bit from partition ID 36A that corresponds to cell ID 44A, also as described above, and thus may further calculate partition ID 36A based on cell ID 44A. Once calculated, maintenance processor 24A generates or updates configuration information 46A based on partition ID 36A (68). The same procedure may also occur contemporaneously in cell 16B (64-68).

Processor cluster 18A next receives a signal from BMC 22A to power up and begin booting BIOS 42A, which as described above may incorporate configuration information 46A. Processor cluster 18A, and in particular, one or more of processors 40 may in the manner described above load configuration information 42A which causes processors 40 to establish partition 38 (70). Again, this same procedure may also occur contemporaneously in cell 14B, such that cells 14A, 14B may form partition 38.

Processors 40 for each of cells 14A, 14B may determine first if the partition identified by partition IDs 36A, 36B comprises a multi-cell partition (72). Assuming that partition 38 is identified in a first instance such that it includes both of cells 14A, 14B, these cells 14A, 14B would each determine that partition 38 is a multi-cell partition. In the event, partition IDs 36A, 36B identify a master cell, cell 14A or 14B identified as master would initiate the below process by which partition 38 is formed, as described above. If however no master cell is specified within partition IDs 36A, 36B, either or both of cells 14A, 14B may initiate the below process by which partition 38 is formed. It is assumed, regardless of whether a master was designated, that cell 14A performs the following processes, however cell 14B may equally perform this process and the techniques should not be limited strictly to the described embodiment.

To form partition 38, processors 40 of processor cluster 18A communicate with processors 40 of processor cluster 18B via respective I/O interfaces 16A, 16B to merge BIOS 42A with BIOS 42B (74). Once merged, processors 40 of both clusters 18A, 18B boot a single operating system across both cells 14A, 14B, as described above (76). Moreover, each of processors clusters 18A, 18B may configure infra-partition network communications channels such that cells 14A, 14B of partition 38 may communicate securely (77). As one example, cells 14A, 14B may form a virtual intelligent platform management bus (IPMB) in accordance with virtual intelligent platform management interface (IPMI) techniques, as described in further detail in the above referenced co-pending application entitled "Mainframe Computing System Having Virtual IPMI Protocol," by named inventors J. Sievert et al.

However, if processors 40 of processor cluster 18A determine that partition 38 does not include multiple cells but only a single cell 14A (contrary to partition ID 38 shown in FIG. 2), processors 40 of processor cluster 18A form their own partition and boot a single operating system within cell 14A, as described above (78). Cell 14B may perform similar operations to that of cell 14A in this instance or may form a multi-cell partition with other cells 14. Regardless of the number of cells within the partition, BMCs 22A, 22B monitor cells 14A, 14B in an attempt to detect issues that might arise within their respective cells 14A, 14B (80), e.g., overheating processor, dysfunctional cooling fan, etc.

If no issues exit, cells 14A, 14B continue to execute within their respective current partitions (82). However, if a cell malfunctions, all of the other cells in the partition and particularly BMCs 22 may issue an alert to a system maintenance processor, e.g., system maintenance processor 34, as described above, and attempt to repartition such that the malfunctioning cell is no longer physically included within the partition (although logically the partition ID for that partition may still indicate that the malfunctioning cell belongs to the partition) (82, 72-82).

For example, if cell 14B malfunctions within two cell partition 38, cell 14A may issue an alert to maintenance processor 34 indicating that cell 14B malfunctioned. Cell 14A may then reestablish partition 38, but because cell 14B is most likely still malfunctioning, only cell 14A is physically included within partition 38. In this instance, administrator 10 may move cell 14B to a new partition establishing the above described asymmetrical partitions. Cell 14A may continue to send alerts that cell 14B is not present within the partition but it will no longer attempt to reestablish the partition until it detects cell 14B or until administrator 10 places cell 14A into its own or another partition. Once cell 14B is fixed or replaced, administrator 10 may further insert cell 14B back into partition 38, whereupon cells 14A and 14B automatically reform partition 38 (but only if administrator 10 did not repartition cell 14A into its own or another partition) in accordance with the decentralized hardware partitioning techniques described above. Various embodiments of the invention have been described. These and otherembodiments are within the scope of the following claims.

**Claims**

1. A method of partitioning a multiprocessing computing system having a plurality of independent computing cells, the method comprising:

     calculating a respective partition identifier with each of the computing cells of the multiprocessing computing system, wherein the partition identifier uniquely identifies one of a plurality of partitions to which the corresponding cell belongs;
     reconfiguring the multiprocessing system to establish the plurality of partitions within the multiprocessing computing system based on the partition identifiers calculated with each of the computing cells; and
     executing a respective instance of an operating system across each of the partitions, wherein each partition comprises a logical association of one or more of the plurality of cells to define a single execution environment.

2. The method of claim 1, further comprising receiving partition selection information via a user interface of the multiprocessing computing system that specifies to which of the plurality of partitions each of the computing cells belongs.

3. The method of claim 2, wherein receiving the partition selection information includes receiving partition selection information that designates one of the cells that belong to each of the plurality of partitions as a master cell.

4. The method of claim 1, wherein calculating the respective partition identifiers includes calculating with each of the computing cells a respective partition identifier by setting a first plurality of bits to designate a master cell and setting a second plurality of bits to designate a plurality of participating cells within a memory of each of the cells.

5. The method of claim 1, wherein reconfiguring the multiprocessing system to establish the partition comprises:

     calculating configuration information based on the respective partition identifier with each of the cells, wherein the configuration information provides information for establishing the plurality of partitions;
     incorporating the configuration information into a boot process each of the cells execute; and
     establishing the plurality of partitions during the boot process according to the configuration information.

6. The method of claim 1, further comprising storing the partition identifier by setting a plurality of bits to identify which of the cells belong to the partition within a memory of the each of the cells.

7. The method of claim 1, wherein each cell of the plurality of cells resides within only one of the plurality of partitions.

8. A multiprocessing computing system comprising:

     a plurality of computing cells that:
     each calculates a respective partition identifier, wherein the partition identifier uniquely identifies one partition of a plurality of partitions to which the corresponding cell belongs;

collectively reconfigure the multiprocessing system to establish the plurality of partitions within the multiprocessing computing system based on the respective partition identifiers; and

collectively execute a respective instance of an operating system across each of the partitions, wherein each partition comprises a logical association of one or more of the plurality of cells to define a single execution environment.

9.  The system of claim 8 further comprising a system maintenance processor that presents a user interface to receive partition selection information, wherein the partition selection information specifies to which of the plurality of partitions each of the computing cells belongs.

10. The system of claim 9 wherein the system maintenance processor that presents a user interface to receive the partition selection information by receiving partition selection information that designates one of the cells that belong to each of the plurality of partitions as a master cell.

11. The system of claim 8,

wherein the plurality of cells each comprise a memory, and

wherein the plurality of cells that each calculate the respective partition identifiers calculate the respective partition identifier by each setting a first plurality of bits to designate a master cell and each setting a second plurality of bits to designate a plurality of participating cells within the respective memory of each of the cells.

12. The system of claim 8, wherein the plurality of cells reconfigure the multiprocessing system to establish the partition by:

each calculating configuration information based on the respective partition identifier with each of the cells, wherein the configuration information provides information for establishing the plurality of partitions;

incorporating the configuration information into a boot process each of the cells execute; and

establishing the plurality of partitions during the boot process according to the configuration information.

13. The system of claim 8,

wherein each of the plurality of cells include a memory to store the partition identifier,

wherein the plurality of cells store the partition identifier by setting a plurality of bits to identify which of the cells belong to the partition within each the respective memory of each of the cells.

14. The system of claim 8, wherein each cell of the plurality of computing cells resides within only one of the plurality of partitions.

15. A multiprocessing computing system comprising:

a plurality of computing means for:

calculating a respective partition identifier, wherein the partition identifier uniquely identifies one of a plurality of partitions to which the corresponding computing means belong;

reconfiguring the multiprocessing system to establish the plurality of partitions within the multiprocessing computing system based on the respective partition identifiers; and

executing a respective instance of an operating system across each of the partitions, wherein each partition comprises a logical association of one or more of the plurality of computing means to define a single execution environment.

# CELLULAR MULTIPROCESSING COMPUTING SYSTEM

## 12

### CELL 14A

| I/O INTERFACE 16A |
| --- |

| PROCESSOR CLUSTER 18A |
| --- |

| MEMORY 20A |
| --- |

**BMC 22A**

MAINTENANCE PROCESSOR 24A

USER INTERFACE 32

I/O INTERFACE 26A

MEMORY 28A

PARTITION ID 36A

SELECTION INFORMATION 30A

### CELL 14N

| I/O INTERFACE 16N |
| --- |

| PROCESSOR CLUSTER 18N |
| --- |

| MEMORY 20N |
| --- |

**BMC 22N**

MEMORY 28N

PARTITION ID 36N

SELECTION INFORMATION 30N

MAINTENANCE PROCESSOR 24N

I/O INTERFACE 26N

33

ADMIN 10

FIG. 1

EP 2 146 281 A2

FIG. 2

EP 2 146 281 A2

48

| OPERATING SYSTEM 56 | | | |
|---|---|---|---|
| BIOS 54 | | | |
| CELL 52A | | | CELL 52N |
| PROCESSOR 50A | ●●● PROCESSOR 50M | ●●● PROCESSOR 50N | ●●● PROCESSOR 50Z |

FIG. 3

58A

| Z | N | N-1 | 0 |
|---|---|---|---|
| PARTICIPATING CELLS <u>60A</u> | | MASTER CELL <u>62A</u> | |

FIG. 4A

58B

| 4 | 3 | 2 | 1 | 0 |
|---|---|---|---|---|
| 0 | 0 | 1 | 0 | 1 |

PARTICIPATING CELLS <u>60B</u>    MASTER CELL <u>62B</u>

FIG. 4B

RECEIVE SELECTION
INFORMATION — 64

CALCULATE PARTITION ID
BASED ON SELECTION
INFORMATION — 66

GENERATE CONFIGURATION
INFORMATION BASED ON
PARTITION ID — 68

LOAD CONFIGURATION
INFORMATION TO ESTABLISH
PARTITION — 70

MULTI-CELL PARTITION? — 72
NO → BOOT OPERATING SYSTEM WITHIN CELL — 78

YES

MERGE BIOS ACROSS CELLS — 74

BOOT OPERATING SYSTEM ACROSS CELLS — 76

CONFIGURE INTRA-PARTITION NETWORK COMMUNICATION — 77

CELL ISSUE? — 80
NO → CONTINUE EXECUTION WITHIN CURRENT PARTITION — 82

YES

ISSUE ALERT, RESTABLISH PARTITION

FIG. 5